(19) Europäisches Patentamt European Patent Office Office européen des brevets

(11) **EP 3 659 976 B1**

(12) **EUROPEAN PATENT SPECIFICATION**

(45) Date of publication and mention of the grant of the patent:
**28.07.2021 Bulletin 2021/30**

(51) Int Cl.:
***C01G 53/00*** *(2006.01)*          ***H01M 4/505*** *(2010.01)*
***H01M 4/525*** *(2010.01)*

(21) Application number: **19209524.8**

(22) Date of filing: **15.11.2019**

(54) **POSITIVE ACTIVE MATERIAL FOR RECHARGEABLE LITHIUM BATTERY, METHOD OF PREPARING THE SAME AND RECHARGEABLE LITHIUM BATTERY INCLUDING THE SAME**

POSITIVES AKTIVMATERIAL FÜR WIEDERAUFLADBARE LITHIUMBATTERIE, VERFAHREN ZUR HERSTELLUNG DAVON UND WIEDERAUFLADBARE LITHIUMBATTERIE DAMIT

MATÉRIAU ACTIF POSITIF POUR BATTERIE AU LITHIUM RECHARGEABLE, SON PROCÉDÉ DE PRÉPARATION ET BATTERIE AU LITHIUM RECHARGEABLE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2018 KR 20180140901**

(43) Date of publication of application:
**03.06.2020 Bulletin 2020/23**

(73) Proprietor: **Samsung SDI Co., Ltd.**
**Gyeonggi-do 17084 (KR)**

(72) Inventors:
• **CHANG, Donggyu**
  **17084 Gyeonggi-do (KR)**
• **KIL, Donghyun**
  **17084 Gyeonggi-do (KR)**
• **KIM, Jongmin**
  **17084 Gyeonggi-do (KR)**
• **YANG, Wooyoung**
  **17084 Gyeonggi-do (KR)**

(74) Representative: **Shearman, James Ward**
**Marks & Clerk LLP**
**15 Fetter Lane**
**London EC4A 1BW (GB)**

(56) References cited:
**EP-A1- 3 331 065     US-A1- 2014 065 483**

**Description**

## BACKGROUND OF THE INVENTION

**(a) Field of the Invention**

A positive active material for a rechargeable lithium battery, a method of preparing the same, and a rechargeable lithium battery including the same are disclosed.

**(b) Description of the Related Art**

As portable electronic devices, communication devices, and the like are developed, there are needs for development of a rechargeable lithium battery having a high energy density.

This rechargeable lithium battery includes a positive electrode and a negative electrode which include an electrode active material layer including an electrode active material formed on an electrode current collector. The positive active material is mostly an intercalation material of lithium ions, and may be oxides such as lithium cobalt oxide ($Li_xCoO_2$), lithium nickel oxide ($Li_xNiO_2$), lithium nickel cobalt oxide ($Li_x(NiCo)O_2$), lithium nickel cobalt manganese oxide ($Li_x(NiCoMn)O_2$), spinel-type lithium manganese oxide ($Li_xMn_2O_4$), manganese dioxide ($MnO_2$), or olivine-type or NASICON-type phosphates such as lithium iron phosphate ($Li_xFePO_4$), lithium manganese phosphate ($Li_xMnPO_4$), and the like, silicates, a polymer material, and the like.

The negative electrode active material may be a compound capable of intercalating lithium metal, its alloy or lithium ion, and may be a polymer material or a carbon material, for example a graphite-based material such as artificial or natural graphite, and the like, non-graphitizable carbon, or graphitizable carbon, carbon nanotube (CNT), a carbon nanofiber (CNF), a carbon nanowall (CNW).

EP 3 331 065 A1 describes the preparation of a positive active material comprising the step of calcining a Li-Ni complex oxide with zirconia particle to form a core-shell structure wherein the zirconia particles are retained on the core.

## SUMMARY OF THE INVENTION

An embodiment of the present invention provides a positive active material for a rechargeable lithium battery having improved charge and discharge capacity, efficiency, and cycle-life characteristics by improving a lithium diffusion degree during charge and discharge, mitigating a stress due to volume changes, and reducing unreacted residual lithium.

Another embodiment provides a method of preparing the positive active material for a rechargeable lithium battery.

Another embodiment provides a rechargeable lithium battery including the positive active material for a rechargeable lithium battery.

An embodiment provides a positive active material for a rechargeable lithium battery including a lithium nickel-based composite oxide including a secondary particle in which a plurality of plate-shaped primary particles are agglomerated; and a coating layer including a fiber-shaped lithium manganese composite oxide, wherein the fiber-shaped lithium manganese composite oxide is attached to the surface of the lithium nickel-based composite oxide.

The fiber-shaped lithium manganese composite oxide may have a diameter of about 2 nm to about 300 nm.

The lithium manganese composite oxide may be represented by represented by Chemical Formula 1:

$$[\text{Chemical Formula 1}] \quad x\text{LiMnO}_2 \cdot y\text{Li}_4\text{Mn}_5\text{O}_{12} \cdot z\text{LiMn}_2\text{O}_4 \cdot (1\text{-}x\text{-}y\text{-}z)\text{Li}_2\text{MnO}_3$$

In Chemical Formula 1, $0 \leq x < 1$, $0 \leq y < 1$, $0 \leq z < 1$, $0 < y+z < 1$, and $0 < x+y+z < 1$.

The lithium manganese composite oxide may have a cubic crystal structure and a monoclinic crystal structure, and optionally an orthorhombic crystal structure.

The lithium manganese composite oxide having the cubic crystal structure may be at least one of $LiMn_2O_4$ and $Li_4Mn_5O_{12}$, the lithium manganese composite oxide having the monoclinic crystal structure may be $Li_2MnO_3$, and the lithium manganese composite oxide having the orthorhombic crystal structure may be $LiMnO_2$.

The coating layer may have a thickness of about 2 nm to about 300 nm.

The lithium manganese composite oxide may be included in an amount of about 0.1 wt% to about 5 wt% based on a total weight of the positive active material.

The positive active material may further include lithium manganese composite oxide particles, the lithium manganese composite oxide particles may have an average particle diameter of less than or equal to about 10 $\mu$m.

The secondary particle may have a regular array structure where (003) planes of the primary particles are oriented in a vertical direction with respect to the surface of the secondary particle.

The secondary particle may have a one-centered radial arrangement having one center or a multi-centered radial array structure having a plurality of centers.

The positive active material may include unreacted residual lithium of less than or equal to about 1,300 ppm or less than or equal to about 1,000 ppm on the surface thereof.

The lithium nickel-based composite oxide may have a porosity of about 1% to about 8%.

The lithium nickel-based composite oxide may have a specific surface area of about 0.3 $m^2$/g to about 0.8 $m^2$/g.

Another embodiment provides a method of preparing the positive active material for a rechargeable lithium battery including mixing a metal hydroxide precursor and a lithium source to prepare a first mixture; first heat-treating the first mixture under a high temperature condition to prepare a first fired product including residual lithium; mixing the first fired product with manganese-based oxide to prepare a second mixture; and second heat-treating the second mixture to prepare a second fired product.

The first heat-treating may be performed at about 650 °C to about 950 °C.

The manganese-based oxide may be mixed in an amount of about 0.1 to about 5 parts by weight based on 100 parts by weight of the first fired product.

The second mixture may further include a lithium source.

Another embodiment provides a rechargeable lithium battery including the positive electrode including a positive active material; a negative electrode including a negative active material; and an electrolyte.

At least some of the above and other features of the invention are set out in the claims.

Other specific details of the embodiments of the present invention are included in the detailed description below.

The lithium nickel-based composite oxide including secondary particles consisting of primary particles with surface orientation has an effect of improving capacity characteristics of the battery by facilitating movement of lithium between the surface of the positive active material and the electrolyte. Also, a residual lithium content generated on the surface of the positive active material particle during a preparing process of the positive active material may be reduced by including lithium manganese composite oxide in addition to the lithium nickel-based composite oxide. Thus, it is possible to reduce a gas generation and side reaction and obtain a rechargeable lithium battery having phase stability and improved cycle-life and capacity characteristics.

## BRIEF DESCRIPTION OF THE DRAWINGS

FIG. 1 is a schematic view showing a positive active material for a rechargeable lithium battery.

FIG. 2A is a schematic view showing oriented primary particles constituting a lithium nickel-based composite oxide, as included in the positive active material according to embodiments of the present disclosure.

FIG. 2B is a schematic view of a secondary particle 20 in which a plurality of plate-shaped lithium nickel-based composite oxide primary particles 10 are agglomerated, according to embodiments of the present disclosure.

FIG. 3 is a perspective view that schematically shows a representative structure of a rechargeable lithium battery.

FIG. 4 is a graph showing gas generation amounts of coin cells according to Example 1, Example 2, and Comparative Example 3 at high temperature storage.

FIG. 5 is a graph showing cycle-lives of coin cells according to Example 1, Example 2, Comparative Example 1, and Comparative Example 2 at room temperature.

FIG. 6A is a cross-sectional transmission electron microscope (TEM) image of a secondary particle synthesized according to Comparative Example 3.

FIG. 6B is a cross-sectional TEM image of a secondary particle synthesized according to Comparative Example 2.

FIG. 6C is a cross-sectional TEM image of a secondary particle synthesized according to Example 2.

FIG. 7A is a TEM image of the selected area diffraction (SAD) pattern of the positive active material prepared according to Example 2 (as shown in FIG. 6C).

FIG. 7B is an energy dispersive X-ray spectroscopy (EDX) spectrum showing the elemental composition of the fiber-shaped lithium manganese composite oxide.

## DETAILED DESCRIPTION OF THE EMBODIMENTS

Hereinafter, embodiments of the present invention are described in detail. However, the present disclosure is not limited to these embodiments and the present disclosure is defined by the scope of claims.

In an embodiment, the size (particle) and average particle diameter may be average particle diameter D50. The average particle diameter D50 represented by a particle diameter corresponds to 50% by volume of the volume of a laser diffraction particle distribution measurement method.

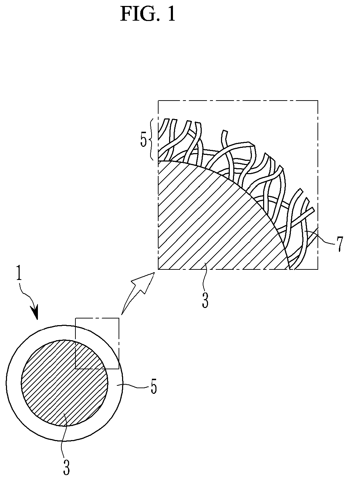

A structure of a positive active material for a rechargeable lithium battery according to an embodiment is described referring to FIG. 1. FIG. 1 is a schematic view of a positive active material for a rechargeable lithium battery according to an embodiment.

Referring to FIG. 1, a positive active material 1 for a rechargeable lithium battery according to an embodiment includes a lithium nickel-based composite oxide 3 including a secondary particle in which a plurality of plate-shaped primary particles is agglomerated; and a coating layer 5 including a fiber-shaped lithium manganese composite oxide; wherein the fiber-shaped lithium manganese composite oxide 7 is attached to the surface of the lithium nickel-based composite oxide 3.

The lithium nickel-based composite oxide 3 includes the coating layer 5 including the fiber-shaped lithium manganese composite oxide 7 on the surface and has improved structural stability. Specifically, the lithium nickel-based composite oxide 3 is suppressed from cracks generated during the charge and discharge of a rechargeable lithium battery and has an effect of reducing a side reaction with an electrolyte solution and accordingly, may reduce a gas generation of the rechargeable lithium battery including the positive active material and thus improve charge and discharge characteristics. In addition, since the lithium manganese composite oxide is formed through a reaction of residual lithium on the surface of the lithium nickel-based composite oxide with a manganese-based oxide, the side reaction of the positive active material with the electrolyte solution may be suppressed by reducing residual lithium inside the lithium nickel-based composite oxide 3 and on the surface thereof.

On the other hand, the coating layer 5 may be formed as a continuous coating layer or a discontinuous island type on the surface of the lithium nickel-based composite oxide 3.

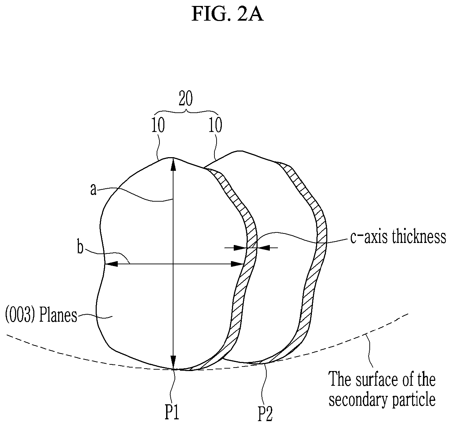

The secondary particle of the lithium nickel-based composite oxide may have a regular array structure where (003) planes of the primary particles are oriented in a vertical direction with respect to the surface of the secondary particle. Hereinafter, the lithium nickel-based composite oxide is described referring to FIG. 2A.

In FIG. 2A, the dimensions of each primary particle 10 can be described in terms of a, b, and c axes, where the "a axis" refers to the longest dimension, the "b axis" refers to the intermediate dimension, and the "c axis" refers to the shortest dimension or thickness of the particle. In some embodiments, the a, b, and c axes additionally correspond to the crystal lattice coordinates (Miller indices) h, k, and l, such that crystal planes normal to e.g., the c axis may be denoted as (00l) and may form a planar surface of the primary particle.

Referring to FIG. 2A, (003) planes of primary particles 10 are oriented in a vertical direction with respect to the surface of the secondary particle. The surface refers to an outermost surface of the secondary particle (see also P1 and P2 as example particles). The vertical direction means that a long axis (a axis) or a short axis (b axis) of the (003) plane and the surface of the secondary particle cross each other at an angle of about 70 ° to about 110 ° for example about 80 ° to about 100 °. When the (003) plane of the primary particles 10 is oriented so as to be perpendicular to the surface of the secondary particle 20, a relatively large number of lithium diffusion passages between boundaries are formed on a shell of the secondary particle 20 and a lithium diffusion degree may be increased by exposing a large amount of the crystal surface capable of lithium transfer, thereby securing high initial efficiency and capacity. In addition, it is possible to suppress the stress caused by volume changes of the secondary particle 20 during charge and discharge to suppress the occurrence of cracks.

As used herein, "a core" refers to a region of about 65 length % from the center to about 85 length % from the center of a total distance from the center to the surface of the secondary particle 20. For example, in the lithium nickel-based composite oxide, it may be a remaining region except a region within about 2 $\mu$m from the outermost. In addition, a "shell" refers to a region of about 5 length % from the outermost of a total distance to about 15 length % from the outermost from the center to the surface of the lithium nickel-based composite oxide or within 2 $\mu$m of the outermost of the lithium nickel-based composite oxide. An "intermediate layer" refers to remaining regions except for the core and the shell. As used herein, the orientation of primary particles 10 may be predominantly in shells of the secondary particle 20.

The secondary particle may have a one-centered radial arrangement having one center or a multi-centered radial array structure having a plurality of centers. Specifically, the plurality of primary particles 10 may be oriented toward one center so as to form a face contact along the c-axis (thickness) direction of the primary particles 10, to provide the secondary particle 20 having a radial array structure.

In another embodiment, the secondary particle 20 may have a multi-centered radial array structure having a plurality of centers. When the secondary particle 20 has a one-centered or multi-centered radial array structure as described above, lithium may be easily intercalated/deintercalated into the center of the secondary particle 20.

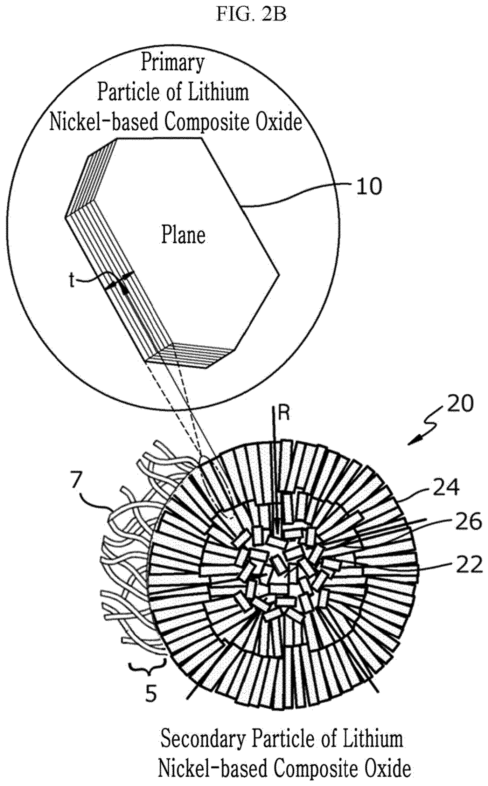

FIG. 2B is a schematic view of a secondary particle 20 in which a plurality of plate-shaped lithium nickel-based composite oxide primary particles 10 are agglomerated, according to embodiments of the present disclosure. The secondary particle 20 includes a core 22, a shell 24, and an intermediate layer 26 between the core 22 and the shell 24. As depicted by the planes within the primary particle 10 shown in the inset, as translated into the context of the secondary particle 20, (003) planes of the primary particles 10 are oriented in a vertical direction with respect to an outermost surface of the secondary particle (e.g., along the direction R). The coating layer 5 including fiber shaped lithium manganese composite oxide 7 is on the outermost surface of the secondary particle 20. While only a portion of the coating layer 5 is shown on the particle in FIG. 2B for clarity, it will be understood that the coating layer 5 and fiber shaped lithium manganese composite oxide 7 are not limited thereto, and for example, may be on the full surface (circumference) on the primary particle 20. FIG. 2B depicts a particle having a single-center radial arrangement structure. However, it will be understood that embodiments of the present disclosure are not limited thereto, and the particle may have a multi-centered radial arrangement structure, as described herein.

The lithium nickel-based composite oxide may be a porous particle including a plurality of pores therein. A total porosity may be greater than or equal to about 1% (e.g. about 1.0%), greater than or equal to about 1.5%, greater than or equal to about 2.0%, or greater than or equal to about 2.5%, and less than or equal to about 8% (e.g. about 8.0%) and less than or equal to about 7.5%, less than or equal to about 7.0%, or less than or equal to about 6.5 %. The porosity is used in the same sense as a pore volume fraction, and is shown as a ratio of an area occupied by pores relative a total area. The lithium nickel-based composite oxide may include pores therein and thereby the pores may effectively accommodate changes in the structure of during charge and discharge of the positive active material.

The lithium nickel-based composite oxide may have a specific surface area of about 0.3 $m^2/g$ to about 0.8 $m^2/g$. When the specific surface area is in the range, electrochemical cycle-life characteristics of the battery may be improved. On the other hand, the specific surface area may be measured in a Brunauer-Emmett-Teller (BET) method. For example, a BET 6-point method may be used according to a nitrogen gas adsorption method by using a porosimetry analyzer (Belsorp-II Mini, Bell Japan Inc.). An unreacted residual lithium content present on the surface of the positive active material may be less than or equal to about 1,300 ppm, for example less than or equal to about 1,200 ppm, less than or equal to about 1,100 ppm, less than or equal to about 1,000 ppm, or less than or equal to about 955 ppm.

The residual lithium content is a lithium content calculated from contents of $Li_2CO_3$ and LiOH remaining on the surface of the positive active material. Generally, a large particle size of a positive active material is desirable for high capacity of a battery, but in this case, since a specific surface area is relatively small, there is a problem that rate capability and initial capacity may be decreased due to a reduction of the active area contacting an electrolyte solution. In order to solve this problem, the lithium nickel-based composite oxide including secondary particles in which a plurality of plate-shaped primary particles are agglomerated is used as a positive active material in an embodiment and thus a specific surface area thereof may be relatively increased. However, as for this positive active material including secondary particles having a developed surface orientation, lithium ions react with moisture or $CO_2$ in the air and thus may easily form surface impurities such as $Li_2CO_3$, LiOH, and the like, while moving on the surface of the active material, and these surface impurities may deteriorate battery capacity or may be decomposed inside a battery, and thus generate gas and cause a battery swelling phenomenon, which results in a serious problem of deteriorating high temperature stability and the like. On the contrary, the lithium manganese composite oxide is prepared by reacting the unreacted residual lithium on the surface of the secondary particles with a manganese-based oxide and thus has no aforementioned problem of the lithium nickel-based composite oxide.

In addition, when the specific surface area of a lithium nickel-based composite oxide with high nickel content is increased, residual lithium inside a cell may react with an electrolyte solution, moisture, or air and thus generates gas and resultantly, shorten a cycle-life of a battery. However, according to an embodiment, the residual lithium on the surface of the lithium nickel-based composite oxide is reduced and thus a gas generation may be suppressed, even though the specific surface area is within the range, and accordingly, capacity and efficiency characteristics of a rechargeable lithium battery may be improved.

The lithium nickel-based composite oxide may be a compound represented by Chemical Formula 2.

$$[\text{Chemical Formula 2}] \qquad Li_a(Ni_{1-x-y-z}Co_xMn_yM_z)O_2$$

$(0.95 \leq a \leq 1.3, x \leq (1-x-y-z), y \leq (1-x-y-z), 0 < x < 1, 0 \leq y < 1, 0 \leq z < 1)$

In Chemical Formula 2, M is at least one element selected from boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), $0.95 \leq a \leq 1.3$. For example, in Chemical Formula 2, $1.0 \leq a \leq 1.1$, $0 < x \leq 0.33$ (for example $0.1 \leq x \leq 0.33$), $0 \leq y \leq 0.5$ (for example $0.05 \leq y \leq 0.3$), $0 \leq z \leq 0.05$, and $0.33 \leq (1-x-y-z) \leq 0.95$.

In an embodiment, in Chemical Formula 2, $0 < x \leq 0.33$, $0 \leq y \leq 0.33$, and $0 \leq z \leq 0.05$. In an embodiment, in Chemical Formula 2, z may be 0. In an embodiment, in Chemical Formula 2, when z is in the range of $0 \leq z \leq 0.05$, M may be aluminium. For example, the lithium nickel-based composite oxide may be $LiNi_{0.6}Co_{0.2}Mn_{0.2}O_2$, $LiNi_{0.5}Co_{0.2}Mn_{0.3}O_2$, $LiNi_{1/3}Co_{1/3}Mn_{1/3}O_2$, $LiNi_{0.8}Co_{0.1}Mn_{0.1}O_2$, or $LiNi_{0.85}Co_{0.1}Al_{0.05}O_2$.

On the surface of the lithium nickel-based composite oxide, a fiber-shaped lithium manganese composite oxide is attached. The lithium manganese composite oxide is coated as a fiber shape and thus may have small contact resistance among particles, a large specific surface area, and a well-developed pore structure, for example, compared with a lithium nickel-based composite oxide coated with a thin film or a particle shape on the surface. Accordingly, lithium ions move into the lithium nickel-based composite oxide more smoothly and faster and are more easily intercalated and deintercalated.

In addition, the fiber-shaped lithium manganese composite oxide is present on the surface of the lithium nickel-based composite oxide and thus may effectively block a side reaction of the lithium nickel-based composite oxide with an electrolyte solution, increase diffusivity of the lithium ions, and thus improve rate capability of a battery, and also improve output characteristics due to resistance reduction on the surface of the positive active material.

The fiber-shaped lithium manganese composite oxide may have a diameter of about 2 nm to about 300 nm, for example about 2 nm to about 250 nm, about 2 nm to about 200 nm, about 2 nm to about 150 nm, about 2 nm to about 50 nm, or about 2 nm to about 10 nm. When the fiber-shaped lithium manganese composite oxide has a diameter within the ranges, the movement of lithium ions inside the positive active material is smoother, a speed thereof is faster, and intercalation and deintercalation of lithium ions may be facilitated.

The lithium manganese composite oxide may be represented by Chemical Formula 1:

$$[\text{Chemical Formula 1}] \qquad x\text{LiMnO}_2 \cdot y\text{Li}_4\text{Mn}_5\text{O}_{12} \cdot z\text{LiMn}_2\text{O}_4 \cdot (1-x-y-z)\text{Li}_2\text{MnO}_3$$

In Chemical Formula 1, $0 \leq x < 1$, $0 \leq y < 1$, $0 \leq z < 1$, $0 < y+z < 1$, and $0 < x+y+z < 1$.

In addition, the lithium manganese composite oxide may have at least two types of crystal structures. For example, the lithium manganese composite oxide may include a cubic crystal structure and a monoclinic crystal structure, and optionally an orthorhombic crystal structure. Unlike a general lithium nickel-based composite oxide, which has a layered crystal structure, the lithium manganese composite oxide according to an embodiment of the present invention includes a cubic crystal structure and a monoclinic crystal structure, and optionally an orthorhombic crystal structure, and therefore lithium ions may be transferred in three dimensions. Therefore, compared to the layered structure capable of two-dimensional movement of lithium ions, the movement of lithium ions is smoother, a speed thereof is faster, and intercalation and deintercalation of lithium ions may be facilitated. In addition, in a crystal formation process of lithium manganese composite oxide, it is easier to remove unreacted residual lithium present on the surface of the lithium nickel-based composite oxide effectively, to remove a sheet resistance layer, and facilitate intercalation and deintercalation of lithium.

The lithium manganese composite oxide having the cubic crystal structure may be at least one of $\text{LiMn}_2\text{O}_4$ and $\text{Li}_4\text{Mn}_5\text{O}_{12}$, the lithium manganese composite oxide having the monoclinic crystal structure may be $\text{Li}_2\text{MnO}_3$, and the lithium manganese composite oxide having the orthorhombic crystal structure may be $\text{LiMnO}_2$. When the lithium manganese composite oxide has the composition or the crystal structure, amounts of residual lithium and gas generated may be reduced and cycle-life and capacity characteristics of the rechargeable lithium battery may be improved.

On the other hand, the crystal structure of the lithium manganese composite oxide may be confirmed through transmission electron microscopy (TEM). A content of each element such as lithium on the surface thereof may be measured through X-ray photoelectron spectroscopy (XPS), transmission electron microscopy, or energy dispersive X-ray spectroscopy (EDS). In addition, the residual lithium of the lithium nickel-based composite oxide may be measured by using an inductively coupled plasma-atomic emission spectrometer (ICP-AES).

The coating layer may have a thickness of about 2 nm to about 300 nm, for example about 100 nm to about 300 nm, about 150 nm to about 250 nm, about 150 nm to about 200 nm, or about 180 nm to about 200 nm. When the thickness of the coating layer is within the ranges, phase stability may be secured and a rechargeable lithium battery with improved cycle-life and capacity characteristics may be obtained.

In addition, the lithium manganese composite oxide may be included in an amount of greater than or equal to about 0.1 wt%, for example greater than or equal to about 0.2 wt%, greater than or equal to about 0.3 wt%, greater than or equal to about 0.4 wt%, or greater than or equal to about 0.5 wt% and less than or equal to about 5 wt%, for example less than or equal to about 4 wt%, less than or equal to about 3 wt%, less than or equal to about 2 wt%, or less than or equal to about 1 wt% based on a total weight of the positive active material. When the amount of the lithium manganese composite oxide is in the range, a reduction effect of the residual lithium and capacity characteristics may be improved.

The positive active material may further include lithium manganese composite oxide particles, the lithium manganese composite oxide particles may have an average particle diameter of less than or equal to about 10 $\mu$m.

The average particle diameter of the lithium manganese composite oxide particles may be less than or equal to about 10 $\mu$m, for example less than or equal to about 8 $\mu$m, less than or equal to about 5 $\mu$m, less than or equal to about 3 $\mu$m, or less than or equal to about 1 $\mu$m. When the average particle diameter is within the ranges, the lithium manganese composite oxide particles may readily be present on the surface of the lithium nickel-based composite oxide. As a result, it is possible to effectively block a side reaction of the lithium nickel-based composite oxide and electrolyte solution, a diffusion degree of lithium ion is improved and thus rate capability of the battery may be improved, and output characteristics may be improved by reducing a resistance on the surface of the positive active material.

Another embodiment provides a method of preparing the positive active material for a rechargeable lithium battery including mixing a metal hydroxide precursor and a lithium source to prepare a first mixture; first heat-treating the first mixture under a high temperature condition to prepare a first fired product including residual lithium; mixing the first fired product with manganese-based oxide to prepare a second mixture; and second heat-treating the second mixture to prepare a second fired product (the positive active material).

First, the metal hydroxide precursor is prepared.

In an embodiment, the metal hydroxide precursor may be prepared through each first, second, and third step process of forming a core, an intermediate layer, and a shell. In the first, second, and third steps, process conditions such as a concentration and an input of a metal raw material, a concentration and an input of ammonia water as a complex agent, an input of a pH controlling agent, and the like may be changed.

As used herein, a "core" in the context of the metal hydroxide precursor refers to a region corresponding to about 65 length % to about 85 length % from the center of a total distance from the center to the surface of the metal hydroxide precursor. For example, in the metal hydroxide precursor, it may be a remaining region except a region within about 2 $\mu$m from the outermost. In addition, a "shell" refers to a region of about 5 length % from the outermost to about 15 length % from the outermost of a total distance from the center to the surface of the metal hydroxide precursor or within about 2 $\mu$m of the outermost of the metal hydroxide precursor. An "intermediate layer" refers to a remaining region except for the core and the shell in the metal hydroxide precursor.

The first step is a step of forming the core of the metal hydroxide precursor.

First, the complex agent and the pH controlling agent are put in a reactor, and the metal raw materials are added thereto and reacted. When pH of the reaction mixture in the reactor is changed as the reaction goes, the pH controlling agent may be further added thereto to control pH. Specifically, the complex agent may have a concentration of about 0.1 M to about 0.7 M, for example, about 0.2 M to about 0.5 M. The input amount of the complex agent may be in a range of about 6 ml/min to about 12 ml/min or about 8 ml/min to about 12 ml/min. The metal raw materials may have concentrations of about 0.1 M to about 3.5 M, for example, about 2 M. The input amounts of the metal raw materials may be in a range of about 50 ml/min to about 100 ml/min.

The second step is a step of forming the intermediate layer of the metal hydroxide precursor.

The metal raw materials and the complex agent are added to a resulting material of the first step reaction to control pH of the reaction mixture, and then, a reaction of the second step is performed. Particularly, in the second step, the input amount and the concentration of the metal raw materials and the complex agent are increased in order to prevent a growth rate decrease of particles after reacting the product from the first step for a predetermined time. Specifically, a concentration of the complex agent may be for example about 0.3 M to about 1.0 M, the input amount of the complex agent may be in a range of about 8 ml/min to about 15 ml/min or about 8 ml/min to about 12 ml/min, the metal raw materials may have concentrations of about 0.1 M to about 3.5 M, for example, about 2 M and the input amounts of the metal raw materials may be in a range of about 90 ml/min to about 120 ml/min.

The third step is a step of forming the shell of the metal hydroxide precursor and finally forming the metal hydroxide precursor.

The input amounts and the concentrations of the metal raw materials and the complex agent are increased in order to prevent a growth rate decrease of particles after reacting a reaction product from the second step for a predetermined time. Specifically, the concentration of the complex agent may be in a range of about 0.35 M to about 1.0 M, the input amount of the complex agent may be in a range of about 12 ml/min to about 20 ml/min or about 12 ml/min to about 18 ml/min, the metal raw materials may have concentrations of about 0.1 M to about 3.5 M, for example, about 2 M, and the input amounts of the metal raw materials may be in a range of about 120 ml/min to about 150 ml/min. On the other hand, a reaction condition of the third step has a large influence on a surface depth of a porous layer of the metal hydroxide precursor.

The first to third steps share the following common conditions.

In each step, an agitation power is in a range of about 0.1 kW/m$^3$ to about 6 kW/m$^3$, for example, about 1 kW/m$^3$ to about 3 kW/m$^3$. In the second and third steps, the agitation power may be decreased compared with that of the first step, but the agitation power of the second and third steps may be the same.

The pH of the reaction mixture may be adjusted in a range of about 10 to about 12. Particularly, the pH controlling agent may control the pH of the reaction mixture to form a precipitate from the reaction mixture, and may be for example sodium hydroxide (NaOH), sodium carbonate (Na$_2$CO$_3$), sodium oxalate (Na$_2$C$_2$O$_4$), and the like, and the sodium hydroxide (NaOH) may be used preferably.

The concentration of the complex agent increases sequentially from the first step toward the second step and then the third step and may be for example about 0.1 M to about 0.7 M. Particularly, a complex agent plays a role in controlling a reaction rate of formation of a precipitate in a co-precipitation reaction, and may be ammonia water and citric acid and in an embodiment, may be preferably ammonia water. On the other hand, an amount of the complex agent is used at a general level.

Meanwhile, the porosity inside the metal hydroxide precursor particles is affected by the time of applying each step described above.

Since pores between (001) crystal planes are appropriately maintained due to a minimized exposure of a (001) crystal plane, the metal hydroxide precursor may have excellent structural stability.

The metal hydroxide precursor may be represented by Me(OH)$_2$ (wherein Me includes nickel, cobalt, manganese, and M of Chemical Formula 2), for example a compound represented by Chemical Formula 3.

[Chemical Formula 3] $(Ni_{1-x-y-z}Co_xMn_yM_z)(OH)_2$

In Chemical Formula 3, M is at least one element selected from boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), $x \leq (1-x-y-z)$, $y \leq (1-x-y-z)$, $0 < x < 1$, $0 \leq y < 1$, and $0 \leq z < 1$. For example, in Chemical Formula 3, $0 < x \leq 0.33$, $0 \leq y \leq 0.5$, $0 \leq z \leq 0.05$, and $0.33 \leq (1-x-y-z) \leq 0.95$. For example, in Chemical Formula 3, $0.5 \leq (1-x-y-z) \leq 0.95$. For example, in Chemical Formula 3, $0 < z \leq 0.05$ and M is aluminium. The metal hydroxide precursor represented by Chemical Formula 3 may be for example at least one of $Ni_{0.6}Co_{0.2}Mn_{0.2}(OH)_2$, $Ni_{0.5}Co_{0.2}Mn_{0.3}(OH)_2$, $Ni_{1/3}Co_{1/3}Mn_{1/3}(OH)_2$, $Ni_{0.8}Co_{0.1}Mn_{0.1}(OH)_2$, and $Ni_{0.85}Co_{0.1}Al_{0.05}(OH)_2$.

Hereinafter, a method of preparing the positive active material for a rechargeable lithium battery is described.

First, the metal hydroxide precursor and a lithium source are mixed to prepare a first mixture. The lithium source may be for example lithium hydroxide, lithium fluoride, lithium carbonate, or a mixture thereof.

A mixing ratio of lithium source and metal hydroxide precursor is controlled stoichiometrically to produce the lithium nickel-based composite oxide of Chemical Formula 2.

The mixing may be dry mixing or may be performed using a mixer or the like. The dry mixing may be performed using milling. The milling is performed so that the metal hydroxide precursor used as the starting material is hardly deformed such as pulverization. For this purpose, it is necessary to control a size of the lithium source mixed with the metal hydroxide precursor in advance. The lithium source may have a size (average particle diameter) of about 5 $\mu$m to about 20 $\mu$m, for example about 10 $\mu$m. When the internal temperature of the mixer is increased above 30 ° C during the above milling process, the internal temperature of the mixer may be cooled to maintain it at room temperature, 25 ° C.

The first mixture is first heat-treated under a high temperature condition to prepare a first fired product.

The first heat-treating may be performed at a high temperature of about 650 °C to about 950 °C, for example, about 750 °C to about 950 °C or about 800 °C to about 900 °C. In the first heat-treating, a temperature-increasing rate may be about 1 °C/min to about 5 °C/min, for example, about 2 °C/min or about 3 °C/min. The first heat-treating time may be changed depending on the first heat-treating temperature and the like, for example, in a range of about 3 hours to about 10 hours or in a range of about 5 hours to about 7 hours.

The first heat-treating may be performed under an oxidizing gas atmosphere. The oxidizing gas may be oxygen or air and a content ratio of oxygen/inert gas may be for example about 20/80 volume% to about 100/0 volume%.

The obtained first fired product is mixed with a manganese-based oxide in a predetermined mole ratio to obtain a second mixture.

The manganese-based oxide may be at least one of $Mn_3O_4$, $Mn_2O_3$, and $MnO_2$.

The first fired product may include the lithium nickel-based composite oxide and the unreacted residual lithium.

The mixing may be dry mixing or may be performed using a mixer or the like. The dry mixing may be performed by using milling.

The manganese-based oxide may be mixed in an amount of about 0.1 to about 5 parts by weight, for example, about 0.3 to about 2 parts by weight, or about 0.5 to about 1.5 parts by weight based on 100 parts by weight of the first fired product. When the first fired product and the manganese-based oxide are mixed within the range, a reduction effect of the unreacted residual lithium is improved, and capacity increase and structure stability of a rechargeable lithium battery may be secured.

The second mixture may further include a lithium source. When the metal hydroxide precursor has a low nickel content, a generation amount of residual lithium may be low, and the second mixture may be mixed with the same lithium source as the lithium source mixed with the first mixture and the lithium source may react with the manganese-based oxide.

The second mixture is subjected to second heat-treating to prepare a second fired product. In addition, the second heat-treating may be performed under an atmospheric gas atmosphere. The atmospheric gas may be dry air or $CO_2$-removed dry air having a content ratio of oxygen/inert gas of 20/80 volume%.

In addition, the second heat-treating may be for example performed at about 300 °C to about 600 °C, for example about 350 °C to about 500 °C or about 370 °C to about 450 °C (e.g. about 400 °C). In addition, a temperature-increasing rate during the second heat-treating may be about 1 ° C/min to about 5 ° C/min, for example about 2 °C/min or 3 ° C/min. A second heat-treating time is variable for a second heat-treating temperature, but may be for example about 3 hours to 10 hours or about 5 hours to about 7 hours. When the second heat-treating temperature is in the range, a reduction effect of unreacted residual lithium may be improved and the lithium manganese composite oxide may be easily formed, thereby ensuring structural stability of the positive active material.

The positive electrode and the negative electrode according to another embodiment are formed by applying each of a composition for forming a positive active material layer and a composition for forming a negative active material layer on a current collector, and drying the composition.

The composition forming the positive active material layer is formed by mixing a positive active material, a conductive agent, a binder, and a solvent, and the positive active material is as described above.

The binder is a component that assists in binding of the active material to the conductive agent and to the current collector. The binder is added in an amount of about 0.5 to about 50 parts by weight based on a total weight of 100 parts by weight of the positive active material. Non-limiting examples of the binder may be polyvinylidene fluoride, polyvinyl alcohol, carboxylmethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), sulfonated EPDM, a styrene butadiene rubber, a fluoro rubber, or various copolymers. An amount of the binder may be about 1 to about 5 parts by weight based on a total weight of 100 parts by weight of the positive active material. When the amount of the binder is in the above range, a binding force of the active material layer to the current collector is improved.

The conductive agent may be not particularly limited as long as it has electron conductivity without causing chemical changes in a battery and may be, for example graphite such as natural graphite or artificial graphite; a carbon-based material such as carbon black, acetylene black, ketjen black, channel black, furnace black, lamp black, thermal black and the like; a conductive fiber such as a carbon fiber or a metal fiber; carbon fluoride; a metal powder such as aluminium or a nickel powder; a conductive whisker such as zinc oxide, or potassium titanate; a conductive metal oxide such as titanium oxide; a conductive material such as a polyphenylene derivative. An amount of the conductive agent may be about 0.5 to about 5 parts (e.g. about 2 to about 5 parts) by weight based on a total weight of 100 parts by weight of the positive active material. When the amount of the conductive agent is in the above range, conductivity of the finally obtained electrode is improved.

Non-limiting examples of the solvent include N-methylpyrrolidone and the like. An amount of the solvent is about 10 to about 100 parts by weight based on 100 parts by weight of the positive active material. When the amount of the solvent is in the range, it is easy to work to form the active material layer.

The positive current collector is about 3 $\mu$m to about 500 $\mu$m thick and is not particularly limited if it has high conductivity without causing chemical changes in the battery, and may be for example, stainless steel, aluminium, nickel, titanium, heat-treated carbon, or aluminium or stainless steel which is surface-treated with carbon, nickel, titanium, silver, and the like. The current collector may form a fine concavo-convex on its surface to enhance an adherence of positive active materials and may be in various forms such as films, sheets, foils, nets, porous bodies, foams and nonwoven fabric bodies.

Separately, a composition for forming a negative active material layer is prepared by mixing a negative active material, a binder, a conductive agent, and a solvent. The negative active material is a material capable of intercalating and releasing lithium ions. As non-limiting examples of the negative active material, a carbon-based material such as graphite or carbon, a lithium metal, an alloy thereof, and a silicon oxide-based material may be used. According to an embodiment of the present invention, silicon oxide may be used.

The binder, the conductive agent, and the solvent may be the same types of materials as the positive electrode. The binder is added in an amount of about 1 to about 50 parts by weight based on a total weight of 100 parts by weight of the negative active material. The conductive agent is added in an amount of about 1 to about 5 parts by weight based on a total weight of 100 parts by weight of the negative active material. When the amount of the conductive agent is in the range, conductivity characteristics of the finally obtained electrode are improved. An amount of the solvent is about 10 to about 100 parts by weight based on 100 parts by weight of the negative active material. When the amount of the solvent is in the range, it is easy to work to form the negative active material layer.

The negative current collector is about 3 $\mu$m to about 500 $\mu$m thick. Such a negative current collector is not particularly limited if it has high conductivity without causing chemical changes in the battery and may be, for example, copper, stainless steel, aluminium, nickel, titanium, heat-treated carbon, copper or stainless steel which is surface-treated with carbon, nickel, titanium, silver, and the like, an aluminium-cadmium alloy, and the like. In addition, the negative current collector may form a fine concavo-convex on its surface to enhance an adherence of negative active materials and may be in various forms such as films, sheets, foils, nets, porous bodies, foams and nonwoven fabric bodies, like the positive current collector.

A separator is disposed between the positive electrode and the negative electrode according to the procedure. The separator has a pore diameter of about 0.01 $\mu$m to about 10 $\mu$m and a thickness of about 5 $\mu$m to about 300 $\mu$m. Specific examples may include polypropylene, polyethylene and the like olefin based polymer; or a sheet made of a glass fiber or a non-woven fabric. When a solid electrolyte such as a polymer is used as the electrolyte, a solid electrolyte may also serve as a separator.

The electrolyte may be a non-aqueous electrolyte including a non-aqueous solvent and a lithium salt, an organic solid electrolyte, an inorganic solid electrolyte, and the like. The non-aqueous solvent may be for example, a aprotic organic solvent such as N-methyl-2-pyrrolidinone, propylene carbonate, ethylene carbonate, butylene carbonate, dimethyl carbonate, diethyl carbonate, gamma-butyro lactone, 1,2-dimethoxyethane, 2-methyl tetrahydrofuran, dimethylsulfoxide, 1,3-dioxolane, formamide, N,N-dimethyl formamide, dioxolane, acetonitrile, nitromethane, methyl formate, methyl acetate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, ethyl propionate, and the like. The lithium salt is a material that is dissolved in the non-aqueous solvent and non-limiting examples thereof may be LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, lithium chloroborate, lower aliphatic lithium carboxylate, tetraphenyl lithium borate, lithium imide, and the like.

Non-limiting examples of the organic solid electrolyte may be a polyethylene derivative, a polyethylene oxide derivative, a polypropylene oxide derivative, a phosphoric acid ester polymer, polyester sulfide, polyvinyl alcohol, polyvinylidene fluoride, and the like.

Non-limiting examples of the inorganic solid electrolyte may be $Li_3N$, LiI, $Li_5NI_2$, $Li_3N$-LiI-LiOH, $Li_2SiS_3$, $Li_4SiO_4$, $Li_4SiO_4$-LiI-LiOH, $Li_3PO_4$-$Li_2S$-$SiS_2$, and the like.

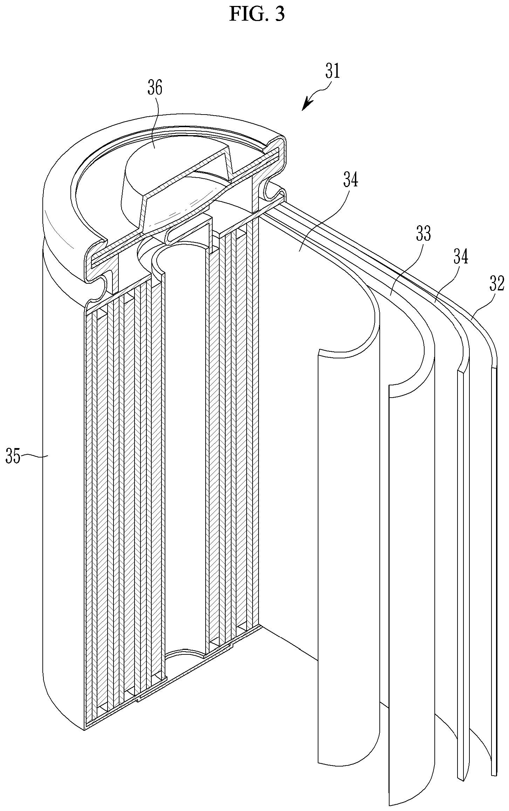

FIG. 3 is a perspective view that schematically shows a representative structure of a rechargeable lithium battery.

Referring to FIG. 3, a rechargeable lithium battery 31 includes a positive electrode 33 including the positive active material according to an embodiment, a negative electrode 32, and a separator 34. The above-described positive electrode 33, the negative electrode 32, and the separator 34 are wound or stacked and housed in a battery case 35. Then, an organic electrolyte solution is injected and sealed in the battery case 35 with a cap assembly 36 to complete a rechargeable lithium battery 31. The battery case 35 may be cylindrical, prismatic, thin film-type, and the like.

The rechargeable lithium battery may be a lithium ion battery.

A separator may be disposed between the positive electrode and the negative electrode and wound or laminated to form an electrode assembly. The electrode assembly is housed in the case, impregnated into the organic electrolyte solution, and the resultant is sealed to complete a rechargeable lithium battery.

Also, the rechargeable lithium battery forms a battery pack with a circuit, and a single or multiple pack may be used for all devices requiring high capacity and high power as needed. For example, it may be used for a laptop, a smart phone, electric vehicle and so on. In addition, the rechargeable lithium battery has excellent storage stability at high temperatures, cycle-life characteristics, and high-rate characteristics, and thus may be used in an electric vehicle (EV). For example, it may be used for a hybrid vehicle such as a plug-in hybrid electric vehicle (PHEV).

The present invention is explained in more detail in the following examples and comparative examples. It is to be understood, however, that the examples are for the purpose of illustration and are not to be construed as limiting the present invention.

### Examples

### Example 1

### Example 1-1: Synthesis of Metal Hydroxide Precursor ($Ni_{0.6}Co_{0.2}Mn_{0.2}$ $(OH)_2$)

The metal hydroxide precursor ($Ni_{0.6}Co_{0.2}Mn_{0.2}(OH)_2$) was synthesized through the co-precipitation method described below. In the following preparing process, a 2M aqueous solution including nickel sulfate, cobalt sulfate and manganese sulfate was used as metal raw materials for forming metal hydroxide precursors.

[1 step: 250 rpm, $NH_3 \cdot H_2O$ 0.50 M, pH 11.4-11.6]

First, ammonia water with a concentration of 0.50 mol/L was added to the reactor. A reaction was started at an agitation power of 250 $kW/m^3$ and a reaction temperature of 50 °C, and then, the metal raw materials were put at 6.0 ml/min, while the ammonia water was put at 1.35 ml/min. Subsequently, NaOH was added thereto in order to maintain pH. Herein, pH of a reactor was in a range of 11.4 to 11.6. Within this pH range, a reaction was performed for 33 hours.

[Post Process]

A post process was performed by washing the reaction resulting material and drying it with hot air at about 150 °C for 24 hours to obtain a metal hydroxide precursor ($Ni_{0.6}Co_{0.2}Mn_{0.2}(OH)_2$).

### Example 1-2: Preparation of Positive Active Material

A first fired product including a lithium nickel-based composite oxide, $LiNi_{0.6}Co_{0.2}Mn_{0.2}O_2$, was obtained by mixing LiOH as a lithium source and the metal hydroxide precursor of $Ni_{0.6}Co_{0.2}Mn_{0.2}(OH)_2$ according to Example 1-1 in the same mole ratio and then, performing a first heat treatment. The first heat-treatment was performed by increasing a temperature at 2.0 °C/min from 25 °C to 850 °C, maintaining the temperature at 850 °C for 6 hours, and decreasing the temperature from 850 °C to 25 °C at 2.0 °C/min.

100 parts by weight of the first fired product and 2 parts by weight of $Mn_2O_3$ were mixed to obtain a second mixture, and the second mixture was second heat-treated to obtain a positive active material. The second heat-treatment was performed by increasing a temperature at 5.0 °C/min from 25 °C to 400 °C, maintaining the temperature at 400 °C for 6 hours, and decreasing the temperature from 400 °C to 25 °C at 5.0 °C/min.

**Example 1-3: Manufacture of Coin Cell**

The prepared positive active material, a carbon black carbon conductive agent (Denka Black, Denka Korea Co., Ltd.), and polyvinylidene fluoride (PVdF) were mixed in a weight ratio of 92:4:4 and then, mixed with N-methylpyrrolidone (NMP) to prepare slurry. The slurry was bar-coated on a 15 $\mu$m-thick aluminum current collector, dried at room temperature and at 120 °C under vacuum again, and then, compressed and punched to manufacture a 25 $\mu$m-thick positive electrode plate.

The positive electrode plate was used along with a lithium metal as a counter electrode, a PTFE separator, and a solution prepared by dissolving 1.3 M $LiPF_6$ in a mixed solvent of EC (ethylene carbonate), DEC (diethyl carbonate), and EMC (ethylmethyl carbonate) (in a volume ratio of 3:4:3) as an electrolyte to manufacture a coin cell.

**Example 2**

**Example 2-1: Synthesis of Metal Hydroxide Precursor ($Ni_{0.6}Co_{0.2}Mn_{0.2}(OH)_2$)**

In the following preparing process, nickel sulfate, cobalt sulfate, and manganese sulfate were used as metal raw materials for forming metal hydroxide precursors.

[First Step: 1.5 kW/m$^3$, $NH_3 \cdot H_2O$ 0.30M, pH 10 to 11, reaction time 6 hours]

First, ammonia water ($NH_3 \cdot H_2O$) having a concentration of 0.30 M was put in a reactor. While a metal raw materials and a complex agent (ammonia water) were added thereto respectively at 90 ml/min and 10 ml/min at 50 °C under an agitation power of 1.5 kW/m$^3$, a reaction was started. While NaOH was added thereto to maintain pH, the reaction was performed for 6 hours. Core particles obtained as a reaction result had an average size of about 5.5 $\mu$m to 6.5 $\mu$m and then, moved toward a second step.

[Second Step: 1.0 kW/m$^3$, $NH_3 \cdot H_2O$ 0.35 M, pH 10 to 11, reaction time 6 hours]

The metal raw materials and the complex agent were added thereto respectively at 100 ml/min and 15 ml/min, while the reaction temperature was maintained at 50 °C, so that the complex agent maintained a concentration of 0.35 M. While NaOH was added thereto in order to maintain pH, the reaction was performed for 6 hours. Herein, the reaction was performed by lowering the agitation power to 1.0 kW/m$^3$ (*i.e.* lower than that of the first step). Particles having a core and an intermediate layer produced from this reaction had an average size of 9 $\mu$m to 10 $\mu$m, and then, a third step was performed as follows.

[Third Step: 1.0 kW/m$^3$, $NH_3 \cdot H_2O$ 0.40 M, pH 10 to 11, reaction time 4 hours]

The metal raw materials and the complex agent were added thereto respectively at 150 ml/min and 20 ml/min, while the reaction temperature was maintained at 50 °C, so that the complex agent maintained a concentration of 0.40 M. While NaOH was added thereto in order to maintain pH, the reaction was performed for 4 hours. Herein, the agitation power was maintained equally to that of the second step.

[Post Process]

As for a post process, the resulting material was washed and hot air-dried at about 150 °C for 24 hours to obtain a metal hydroxide precursor ($Ni_{0.6}Co_{0.2}Mn_{0.2}(OH)_2$).

**Example 2-2: Preparation of Positive Active Material**

A positive active material was prepared according to the same method as Example 1 (Example 1-2) except for using the metal hydroxide precursor according to Example 2-1.

**Example 2-3: Manufacture of Coin Cell**

A coin cell was manufactured according to the same method as Example 1 (Example 1-3) except for using the positive active material according to Example 2-2.

**Comparative Example 1**

A coin cell was manufactured according to the same method as Example 1 except that 100 parts by weight of the first fired product was mixed with 2 parts by weight of $Al_2O_3$ instead of $Mn_2O_3$ to obtain a second mixture and a second heat-treating temperature was 700 °C to prepare a positive active material on the surface of which $Al_2O_3$ was uniformly coated (film-coated).

**Comparative Example 2**

A coin cell was manufactured according to the same method as Example 1 except that 100 parts by weight of the first fired product was mixed with 2 parts by weight of zirconium oxide ($ZrO_2$) instead of $Mn_2O_3$ to obtain a second mixture and a second heat-treating temperature was 600 °C to prepare a positive active material on the surface of which zirconium oxide ($ZrO_2$) was uniformly coated in a form of a particle (particle-coated).

**Comparative Example 3**

A coin cell was manufactured according to the same method as Comparative Example 1 except that the metal hydroxide precursor according to Example 2-1 was used to prepare a positive active material on the surface of which $Al_2O_3$ was uniformly coated (film-coated).

**Evaluation Example 1:** Evaluation of Residual Lithium Content

Unreacted residual lithium present on the surfaces of the positive active materials according to Example 1, Example 2, Comparative Example 2 and Comparative Example 3 were measured using a HCl titration method, and the results are shown in Table 1.

The unreacted residual lithium contents were measured in the following method. 10 g of a positive active material was put in distilled water and then, stirred at 300 rpm for 30 minutes, and then, a solution part was taken therefrom, and a pH change thereof was measured, while HCl was put therein. Since the unreacted residual lithium was present as $Li_2CO_3$ and LiOH, $H^+$ was reacted with $OH^-$ and $CO_3^{2-}$ ions, when the HCl was added thereto, and reached a titration, and accordingly, the unreacted residual lithium contents were obtained by measuring an amount of the put HCl solution.

[Table 1]

|  | Residual lithium content (Li content) [ppm] |
|---|---|
| Example 1 | 803 |
| Example 2 | 954 |
| Comparative Example 2 | 1559 |
| Comparative Example 3 | 1467 |

In Examples 1 and 2, unreacted residual lithium was greatly reduced by a fiber-shaped coating layer including a fiber-shaped lithium manganese composite oxide, but in Comparative Example 2 including a coating layer including $ZrO_2$ in the form of a plurality of particles and Comparative Example 3, unreacted residual lithium was relatively less reduced by a thin-film coating layer including aluminum oxide.

**Evaluation Example 2:** Evaluation of High Temperature Gas Generation Amount

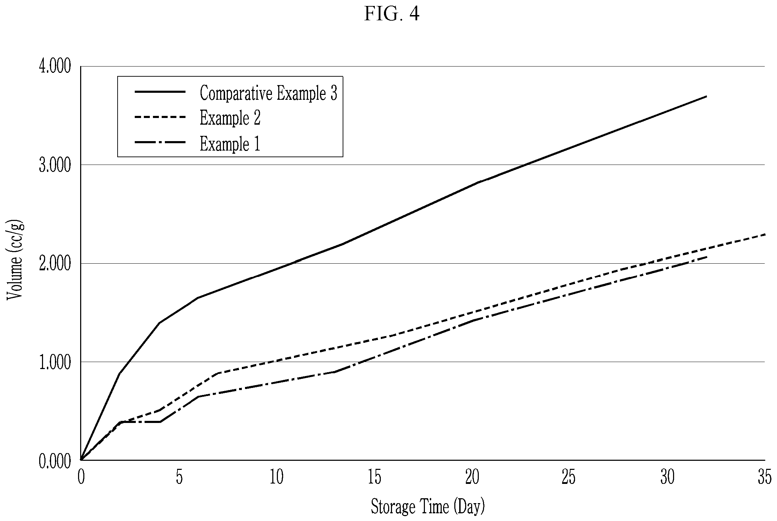

The coin cells according to Examples 1 and 2 and Comparative Example 3 were charged under a constant current at a current of a 0.1 C rate up to a voltage of 4.3 V (vs. Li) and subsequently, cut off at a current of a 0.05 C rate, while the 4.3 V was maintained in the constant voltage mode, at the 1st cycle at room temperature (25 °C). Subsequently, the coin cells were discharged to a voltage of 3.0 V (vs. Li) at a constant current of a 0.1 C rate. At the 2nd cycle, the coin cells were charged under a constant current at a current of a 0.1 C rate up to 4.3 V (vs. Li) and cut off at a current of a 0.05 C rate, while the 4.3 V was maintained in the constant voltage mode at 25 °C and then, disassembled, and subsequently, each electrode plate taken therefrom was put in a pouch along with an electrolyte solution and stored in an 80°C oven, a volume change of the pouch was measured and converted into a mass change in a Archimedes method, and the results are shown in FIG. 4. Meanwhile, the electrolyte was prepared by dissolving 1.3 M $LiPF_6$ in a mixed solvent of EC (ethylene carbonate), DEC (diethyl carbonate), and EMC (ethylmethyl carbonate) (in a volume ratio of 3:4:3).

Referring to FIG. 4, Comparative Example 3 generated gas by unreacted residual lithium on the surface of the positive active material, caused a battery swelling phenomenon, and thus increased a generated gas amount during the storage at a high temperature.

On the contrary, Examples 1 and 2 were suppressed from gas generation during the storage at a high temperature.

**Evaluation Example 3:** Evaluation of Charge and Discharge Characteristics

The coin cells according to Examples 1 and 2 and Comparative Examples 1 to 3 were charged under a constant current up to a voltage of 4.3 V (vs. Li) at a current of a 0.1 C rate and subsequently, cut off at a current of a 0.05 C rate, while the 4.3 V was maintained in the constant voltage mode, at 25 °C. Subsequently, the coin cells were discharged to a voltage of 3.0 V (vs. Li) at a constant current of a 0.1 C rate (1st cycle). In the initial charge and discharge experiment results, initial charge and discharge efficiency was calculated according to Equation 1. The results of Example 2 and Comparative Examples 1 and 2 are shown in Table 1.

[Equation 1]

$$\text{Initial charge and discharge efficiency (I.C.E)} = [\text{first discharge capacity} / \text{first charge capacity}] \times 100$$

[Table 2]

|  | Example 2 | Comparative Example1 | Comparative Example2 |
|---|---|---|---|
| Charge capacity (mAh/g) | 197 | 198 | 198 |
| Discharge capacity (mAh/g) | 189 | 178 | 178 |
| I.C.E (%) | 95.9 | 89.9 | 89.9 |

As shown in Table 2, a rechargeable lithium battery cell including the positive active material according to Example 2 exhibited improved initial charge and discharge efficiency compared with a rechargeable lithium battery cell including the positive active material whose surface was coated with an aluminum oxide according to Comparative Example 1 and a rechargeable lithium battery cell including the positive active material whose surface was coated with a zirconium oxide according to Comparative Example 2.

**Evaluation Example 4:** Evaluation of Cycle-life Characteristics

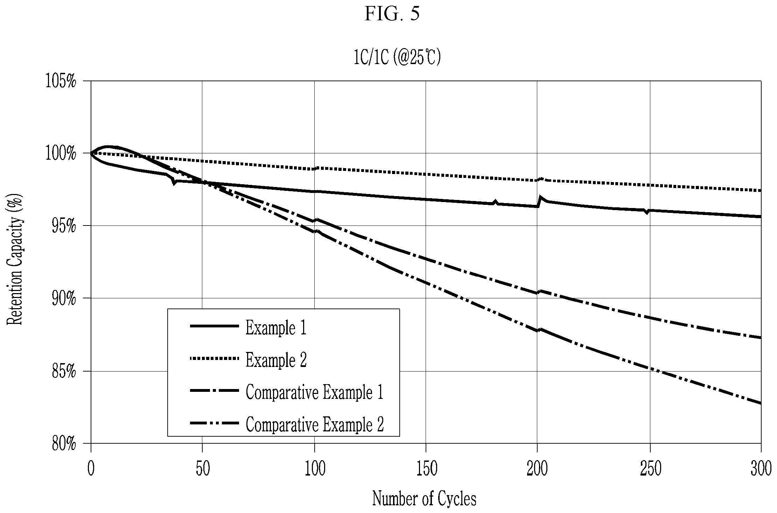

The coin cells after the 1st cycle in Evaluation Example 3 were charged under a constant current at a current of a 1.0 C rate up to 4.30 V (vs. Li) and subsequently, cut off at a current of a 0.05 C rate, while the 4.30 V was maintained in the constant voltage mode, at 25 °C. Subsequently, the coin cells were discharged to a voltage of 3.0 V (vs. Li) at a constant current of a 1.0 C rate, of which this charge and discharge cycle was regarded as one cycle and repeated up to the 300th cycle. In all the charge and discharge cycles, a pause of 10 minutes was set after each charge/discharge cycle. The charge and discharge experiment results were used to calculate a capacity retention at the 300th cycle according to Equation 2. The results of Examples 1 and 2 and Comparative Examples 1 and 2 are shown in FIG. 5.

[Equation 2]

$$\text{Capacity retention at 300th cycle [\%]} = [\text{Discharge capacity at 300th cycle/Discharge capacity at 1st cycle}] \times 100$$

Examples 1 and 2 exhibited much excellent cycle-life characteristics by effectively removing unreacted residual lithium on the surface of a lithium nickel-based composite oxide compared with Comparative Examples 1 and 2.

**Evaluation Example 5: Transmission Electron Microscopy Imaging**

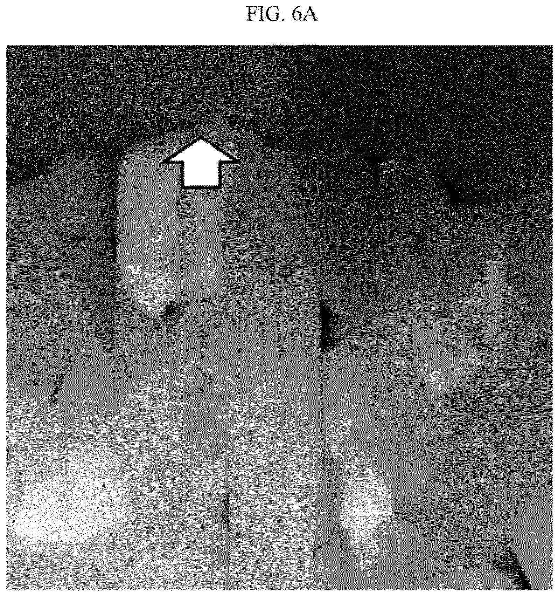

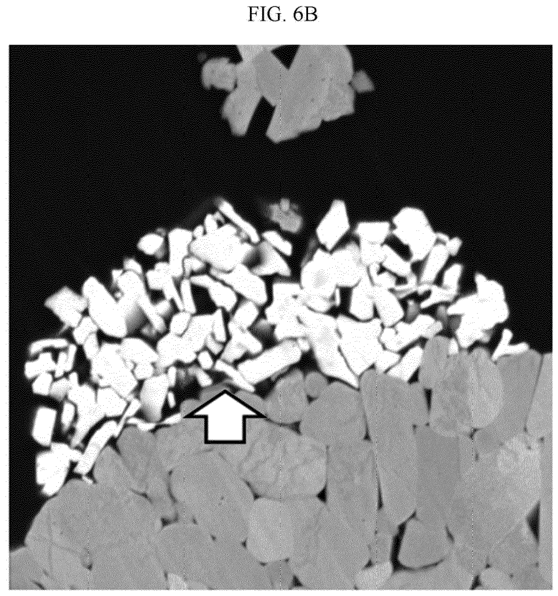

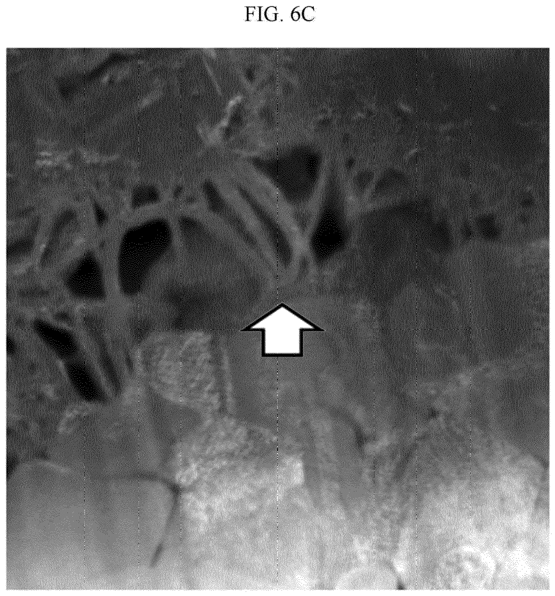

The positive active materials according to Example 2 and Comparative Examples 2 and 3 were analyzed using transmission electron microscopy (TEM). FIG. 6A is a cross-sectional TEM image of a secondary particle synthesized according to Comparative Example 3. FIG. 6B is a cross-sectional TEM image of a secondary particle synthesized according to Comparative Example 2. FIG. 6C is a cross-sectional TEM image of a secondary particle synthesized according to Example 2.

FIG. 6A shows that the particle of Comparative Example 3 includes a substantially uniform thin-film layer of $Al_2O_3$ coated on the surface (see arrow). FIG. 6B shows that the particle of Comparative Example 2 includes a coating in the form of a plurality of particles or particle-shaped structures. FIG. 6C shows that the particle of Example 2 includes a fiber-shaped coating layer including the fiber-shaped lithium manganese-based composite oxide according to embodiments of the present disclosure.

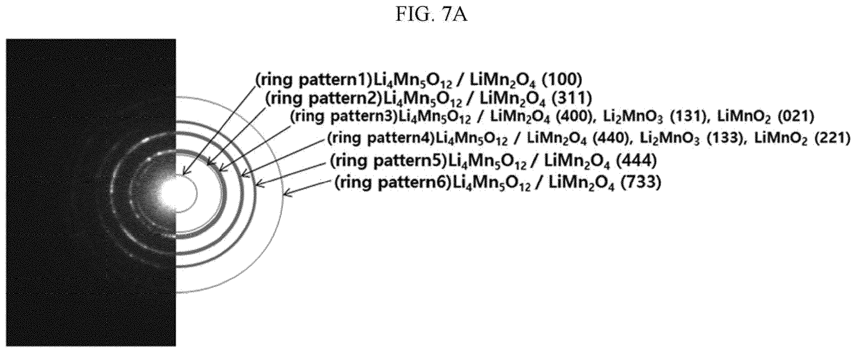

FIG. 7A is a TEM image of the selected area diffraction (SAD) pattern of the coating layer including fiber-shaped lithium manganese composite oxide in the positive active material of Example 2 (as shown in FIG. 6C). The crystal lattice structure of the lithium manganese composite oxide at the surface of the secondary particle may be identified by the interplanar distances in the ring diffraction pattern (e.g., the distance from the center to a ring) as shown in the TEM image. In FIG. 7A, since ring patterns 1, 2, 5, and 6 corresponding to cubic phases (e.g., $Li_4Mn_5O_{12}$, $LiMn_2O_4$) were found, the lithium manganese composite oxide was found to have or include a cubic crystal lattice structure.

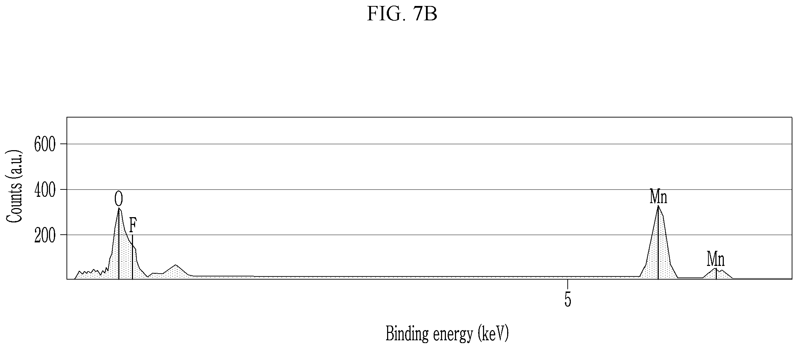

FIG. 7B is an energy dispersive X-ray spectroscopy (EDX) spectrum showing the elemental composition of the fiber-shaped lithium manganese composite oxide. The spectrum of FIG. 7B additionally confirms that the fiber includes Mn and O, consistent with a composition including lithium manganese composite oxide.

While this invention has been described in connection with what is presently considered to be practical embodiments, it is to be understood that the invention is not limited to the disclosed embodiments. On the contrary, it is intended to cover various modifications included within the scope of the appended claims.

**Claims**

1. A positive active material for a rechargeable lithium battery, comprising
   a lithium nickel-based composite oxide including a secondary particle in which a plurality of plate-shaped primary particles are agglomerated; and
   a coating layer including a fiber-shaped lithium manganese composite oxide,
   wherein the fiber-shaped lithium manganese composite oxide is attached to the surface of the lithium nickel-based composite oxide.

2. A positive active material according to claim 1, wherein the fiber-shaped lithium manganese composite oxide has a diameter of 2 nm to 300 nm.

3. A positive active material according to claim 1 or claim 2, wherein the lithium manganese composite oxide is represented by Chemical Formula 1:

   [Chemical Formula 1]   $xLiMnO_2 \cdot yLi_4Mn_5O_{12} \cdot zLiMn_2O_4 \cdot (1-x-y-z)Li_2MnO_3$

   wherein, in Chemical Formula 1, $0 \leq x < 1$, $0 \leq y < 1$, $0 \leq z < 1$, $0 < y+z < 1$, and $0 < x+y+z < 1$.

4. A positive active material according to any of claims 1 to 3, wherein the lithium manganese composite oxide has a cubic crystal structure and a monoclinic crystal structure, and optionally an orthorhombic crystal structure.

5. A positive active material according to claim 4, wherein
the lithium manganese composite oxide having the cubic crystal structure is at least one of $LiMn_2O_4$ and $Li_4Mn_5O_{12}$,
the lithium manganese composite oxide having the monoclinic crystal structure is $Li_2MnO_3$, and
the lithium manganese composite oxide having the orthorhombic crystal structure is $LiMnO_2$.

6. A positive active material according to any one of claims 1 to 5, wherein the coating layer has a thickness of 2 nm to 300 nm.

7. A positive active material according to any one of claims 1 to 6, wherein the lithium manganese composite oxide is included in an amount of 0.1 wt% to 5 wt% based on a total weight of the positive active material.

8. A positive active material according to any one of claims 1 to 7, wherein the positive active material further include lithium manganese composite oxide particles,
wherein the lithium manganese composite oxide particles has an average particle diameter of less than or equal to 10 $\mu$m.

9. A positive active material according to any one of claims 1 to 8, wherein the secondary particle has a regular array structure where (003) planes of the primary particles are oriented in a vertical direction with respect to the surface of the secondary particle.

10. A positive active material according to any one of claims 1 to 9, wherein the secondary particle has a one-centered radial arrangement having one center or a multi-centered radial array structure having a plurality of centers.

11. A positive active material according to any one of claims 1 to 10, wherein the positive active material comprises unreacted residual lithium of less than or equal to 1,300 ppm on the surface thereof, preferably than or equal to 1,000 ppm on the surface thereof.

12. A positive active material according to any one of claims 1 to 11, wherein:

the lithium nickel-based composite oxide has a porosity of 1% to 8%; and/or
the lithium nickel-based composite oxide has a specific surface area of 0.3 $m^2$/g to 0.8 $m^2$/g.

13. A method of preparing the positive active material for a rechargeable lithium battery, comprising
mixing a metal hydroxide precursor and a lithium source to prepare a first mixture;
first heat-treating the first mixture under a high temperature condition to prepare a first fired product including residual lithium;
mixing the first fired product with manganese-based oxide to prepare a second mixture; and
second heat-treating the second mixture to prepare the positive active material according to any one of claims 1 to 12.

14. A method according to claim 13, wherein:

the first heat-treating is performed at 650 °C to 950 °C; and/or
the manganese-based oxide is mixed in an amount of 0.1 to 5 parts by weight based on 100 parts by weight of the first fired product; and/or
the second mixture further comprises a lithium source.

15. A rechargeable lithium battery comprising
a positive electrode comprising the positive active material according to any one of claims 1 to 12;
a negative electrode; and
an electrolyte.


**Patentansprüche**

1. Positives Aktivmaterial für eine wiederaufladbare Lithiumbatterie, umfassend
ein Verbundoxid auf Lithium-Nickel-Basis, das ein Sekundärpartikel umfasst, in dem eine Mehrzahl plattenförmiger Primärpartikel agglomeriert sind; und
eine Beschichtungsschicht, die ein faserförmiges Lithium-Mangan-Verbundoxid umfasst,

wobei das faserförmige Lithium-Mangan-Verbundoxid an die Oberfläche des Verbundoxids auf Lithium-Nickel-Basis gebunden ist.

2. Positives Aktivmaterial nach Anspruch 1, wobei das faserförmige Lithium-Mangan-Verbundoxid einen Durchmesser von 2 nm bis 300 nm aufweist.

3. Positives Aktivmaterial nach Anspruch 1 oder Anspruch 2, wobei das Lithium-Mangan-Verbundoxid durch die chemische Formel 1 dargestellt ist:

[Chemische Formel 1] $\quad xLiMnO_2 \cdot yLi_4Mn_5O_{12} \cdot zLiMn_2O_4 \cdot (1-x-y-z)Li_2MnO_{3hgb}$

wobei in der chemischen Formel 1, $0 \leq x < 1$, $0 \leq y < 1$, $0 \leq z < 1$, $0 < y+z < 1$ und $0 < x+y+z < 1$.

4. Positives Aktivmaterial nach einem der Ansprüche 1 bis 3, wobei das Lithium-Mangan-Verbundoxid eine kubische Kristallstruktur und eine monokline Kristallstruktur und gegebenenfalls eine orthorhombische Kristallstruktur aufweist.

5. Positives Aktivmaterial nach Anspruch 4, wobei:

das Lithium-Mangan-Verbundoxid mit der kubischen Kristallstruktur mindestens eines aus $LiMn_2O_4$ und $Li_4Mn_5O_{12}$ ist,
das Lithium-Mangan-Verbundoxid mit der monoklinen Kristallstruktur $Li_2MnO_3$ ist und
das Lithium-Mangan-Verbundoxid mit der orthorhombischen Kristallstruktur $LiMnO_2$ ist.

6. Positives Aktivmaterial nach einem der Ansprüche 1 bis 5,
wobei die Beschichtungsschicht eine Dicke von 2 nm bis 300 nm aufweist.

7. Positives Aktivmaterial nach einem der Ansprüche 1 bis 6, wobei das Lithium-Mangan-Verbundoxid in einer Menge von 0,1 Gew.-% bis 5 Gew.-%, bezogen auf ein Gesamtgewicht des positiven Aktivmaterials, enthalten ist.

8. Positives Aktivmaterial nach einem der Ansprüche 1 bis 7, wobei das positive Aktivmaterial ferner Lithium-Mangan-Verbundoxid-Partikel umfasst,
wobei die Lithium-Mangan-Verbundoxid-Partikel einen durchschnittlichen Partikeldurchmesser von weniger als oder gleich 10 $\mu$m aufweisen.

9. Positives Aktivmaterial nach einem der Ansprüche 1 bis 8,
wobei das Sekundärpartikel eine regelmäßige Anordnungsstruktur aufweist, wo (003) Flächen der Primärpartikel in einer vertikalen Richtung bezogen auf die Oberfläche des Sekundärpartikels ausgerichtet sind.

10. Positives Aktivmaterial nach einem der Ansprüche 1 bis 9,
wobei das Sekundärpartikel eine einzentrische radiale Anordnung mit einem Zentrum oder eine multizentrische radiale Anordnungsstruktur mit einer Mehrzahl von Zentren aufweist.

11. Positives Aktivmaterial nach einem der Ansprüche 1 bis 10, wobei das positive Aktivmaterial nicht umgesetztes verbleibendes Lithium in einer Menge von weniger als oder gleich 1.300 ppm auf seiner Oberfläche, vorzugsweise weniger als oder gleich 1.000 ppm auf seiner Oberfläche, umfasst.

12. Positives Aktivmaterial nach einem der Ansprüche 1 bis 11, wobei:

das Verbundoxid auf Lithium-Nickel-Basis eine Porosität von 1 % bis 8 % aufweist; und/oder
das Verbundoxid auf Lithium-Nickel-Basis eine spezifische Oberfläche von 0,3 m²/g bis 0,8 m²/g aufweist.

13. Verfahren zur Herstellung des positiven Aktivmaterials für eine wiederaufladbare Lithiumbatterie, umfassend
Mischen eines Metallhydroxid-Vorläufers und einer Lithiumquelle zum Herstellen eines ersten Gemisches;
erstes Wärmebehandeln des ersten Gemisches unter einer Hochtemperaturbedingung zum Herstellen eines ersten gebrannten Produktes, das verbleibendes Lithium umfasst;
Mischen des ersten gebrannten Produktes mit Oxid auf Manganbasis zum Herstellen eines zweiten Gemisches; und
zweites Wärmebehandeln des zweiten Gemisches zum Herstellen des positiven Aktivmaterials nach einem der Ansprüche 1 bis 12.

**14.** Verfahren nach Anspruch 13, wobei:

das erste Wärmebehandeln bei 650 °C bis 950 °C ausgeführt wird; und/oder
das Oxid auf Manganbasis in einer Menge von 0,1 bis 5 Gewichtsteilen basierend auf 100 Gewichtsteilen des ersten gebrannten Produktes eingemischt wird; und/oder
das zweite Gemisch ferner eine Lithiumquelle umfasst.

**15.** Wiederaufladbare Lithiumbatterie, umfassend
eine positive Elektrode, die das positive Aktivmaterial nach einem der Ansprüche 1 bis 12 umfasst;
eine negative Elektrode; und
einen Elektrolyten.

**Revendications**

**1.** Matériau actif positif pour une batterie rechargeable au lithium, comprenant
un oxyde composite à base de lithium et de nickel comprenant une particule secondaire dans laquelle une pluralité de particules primaires en forme de plaques sont agglomérées ; et
une couche de revêtement comprenant un oxyde composite de lithium et de manganèse en forme de fibres,
dans lequel l'oxyde composite de lithium et de manganèse en forme de fibres est attaché à la surface de l'oxyde composite à base de lithium et de nickel.

**2.** Matériau actif positif selon la revendication 1, dans lequel l'oxyde composite de lithium et de manganèse en forme de fibres a un diamètre de 2 nm à 300 nm.

**3.** Matériau actif positif selon la revendication 1 ou la revendication 2, dans lequel l'oxyde composite de manganèse et de lithium est représenté par la formule chimique 1 :

[formule chimique 1]    $x\text{LiMnO}_2 \cdot y\text{Li}_4\text{Mn}_5\text{O}_{12} \cdot z\text{LiMn}_2\text{O}_4 \cdot (1\text{-}x\text{-}y\text{-}z)\text{Li}_2\text{MnO}_3$

où, dans la formule chimique 1, $0 < x < 1$, $0 \leq y < 1$, $0 \leq z < 1$, $0 < y+z < 1$, et $0 < x+y+z < 1$.

**4.** Matériau actif positif selon l'une quelconque des revendications 1 à 3, dans lequel l'oxyde composite de lithium et de manganèse a une structure cristalline cubique et une structure cristalline monoclinique, et éventuellement une structure cristalline orthorhombique.

**5.** Matériau actif positif selon la revendication 4, dans lequel
l'oxyde composite de lithium et de manganèse ayant la structure cristalline cubique est au moins l'un parmi $\text{LiMn}_2\text{O}_4$ et $\text{Li}_4\text{Mn}_5\text{O}_{12}$,
l'oxyde composite de lithium et de manganèse ayant la structure cristalline monoclinique est $\text{Li}_2\text{MnO}_3$, et
l'oxyde composite de lithium et de manganèse ayant la structure cristalline orthorhombique est $\text{LiMnO}_2$.

**6.** Matériau actif positif selon l'une quelconque des revendications 1 à 5, dans lequel la couche de revêtement a une épaisseur de 2 nm à 300 nm.

**7.** Matériau actif positif selon l'une quelconque des revendications 1 à 6, dans lequel l'oxyde composite de lithium et de manganèse est présent en une quantité de 0,1 % en poids à 5 % en poids par rapport au poids total du matériau actif positif.

**8.** Matériau actif positif selon l'une quelconque des revendications 1 à 7, où le matériau actif positif comprend en outre des particules d'oxyde composite de lithium et de manganèse,
dans lequel les particules d'oxyde composite de lithium et de manganèse ont une granulométrie moyenne inférieure ou égale à 10 $\mu$m.

**9.** Matériau actif positif selon l'une quelconque des revendications 1 à 8, dans lequel la particule secondaire a une structure en réseau régulier où les plans (003) des particules primaires sont orientés dans une direction verticale par rapport à la surface de la particule secondaire.

10. Matériau actif positif selon l'une quelconque des revendications 1 à 9, dans lequel la particule secondaire a un agencement radial monocentrique ayant un seul centre ou une structure de réseau radial multicentrique ayant une pluralité de centres.

11. Matériau actif positif selon l'une quelconque des revendications 1 à 10, où le matériau actif positif comprend du lithium résiduel n'ayant pas réagi à raison de 1300 ppm ou moins sur sa surface, de préférence à raison de 1000 ppm ou moins sur sa surface.

12. Matériau actif positif selon l'une quelconque des revendications 1 à 11, dans lequel :

l'oxyde composite à base de lithium et de nickel a une porosité de 1 % à 8 % ; et/ou
l'oxyde composite à base de lithium et de nickel a une surface spécifique de 0,3 $m^2$/g à 0,8 $m^2$/g.

13. Procédé de préparation du matériau actif positif pour une batterie rechargeable au lithium, comprenant les étapes consistant en
le mélange d'un précurseur d'hydroxyde métallique et d'une source de lithium pour préparer un premier mélange ;
un premier traitement à la chaleur du premier mélange dans des conditions de température élevée pour préparer un premier produit cuit contenant du lithium résiduel ;
le mélange du premier produit cuit avec un oxyde à base de manganèse pour préparer un deuxième mélange ; et
un deuxième traitement à la chaleur du deuxième mélange pour préparer le matériau actif positif selon l'une quelconque des revendications 1 à 12.

14. Procédé selon la revendication 13, dans lequel :

le premier traitement à la chaleur est effectué à une température de 650°C à 950°C ; et/ou
l'oxyde à base de manganèse est mélangé en une quantité de 0,1 à 5 parties en poids pour 100 parties en poids du premier produit cuit ; et/ou
le deuxième mélange comprend en outre une source de lithium.

15. Batterie rechargeable au lithium comprenant
une électrode positive comprenant le matériau actif positif selon l'une quelconque des revendications 1 à 12 ;
une électrode négative ; et
un électrolyte.

FIG. 1

## FIG. 2A

FIG. 2B

Primary
Particle of Lithium
Nickel-based Composite Oxide

Plane

t

10

R

20

24

26

22

7

5

Secondary Particle of Lithium
Nickel-based Composite Oxide

FIG. 3

FIG. 4

FIG. 5

1C/1C (@25℃)

EP 3 659 976 B1

FIG. 6A

FIG. 6B

FIG. 6C

FIG. 7A

(ring pattern1)$Li_4Mn_5O_{12}$ / $LiMn_2O_4$ (100)
(ring pattern2)$Li_4Mn_5O_{12}$ / $LiMn_2O_4$ (311)
(ring pattern3)$Li_4Mn_5O_{12}$ / $LiMn_2O_4$ (400), $Li_2MnO_3$ (131), $LiMnO_2$ (021)
(ring pattern4)$Li_4Mn_5O_{12}$ / $LiMn_2O_4$ (440), $Li_2MnO_3$ (133), $LiMnO_2$ (221)
(ring pattern5)$Li_4Mn_5O_{12}$ / $LiMn_2O_4$ (444)
(ring pattern6)$Li_4Mn_5O_{12}$ / $LiMn_2O_4$ (733)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3331065 A1